# EUROPÄISCHE PATENTSCHRIFT

(11) **EP 2 971 757 B1**
(45) Veröffentlichungstag und Bekanntmachung des Hinweises auf die Patenterteilung: **29.06.2022**
(21) Anmeldenummer: 14708240.8
(22) Anmeldetag: 04.03.2014
(51) Int. Cl.: F03D 7/02, H02J 3/38, F03D 9/25

(54) **WINDKRAFTANLAGE MIT FREQUENZMESSUNG**
WIND POWER PLANT HAVING FREQUENCY MEASUREMENT
ÉOLIENNE À MESURE DE FRÉQUENCE

(30) Priorität: 15.03.2013 DE 102013204600
(43) Veröffentlichungstag der Anmeldung: 20.01.2016
(73) Patentinhaber: Siemens Gamesa Renewable Energy Service GmbH, 20097 Hamburg (DE)
(72) Erfinder: BLUHM, Roman, 22844 Norderstedt (DE)
(74) Vertreter: Glawe, Delfs, Moll
(86) Internationale Anmeldenummer: PCT/EP2014/054193
(87) Internationale Veröffentlichungsnummer: WO 2014/139838

(56) Entgegenhaltungen:
- DE-A1- 10 022 974
- US-A1- 2011 109 086
- US-A1- 2011 153 099
- US-A1- 2012 104 756

## Beschreibung

Die Erfindung betrifft ein Verfahren zum Steuern einer Windenergieanlage, die an ein elektrisches Netz angeschlossen ist, eine im Netz vorliegende Netzfrequenz erfasst und bei der die Leistungsabgabe in Abhängigkeit der Netzfrequenz durch eine Steuerung geregelt wird, insbesondere bei Überschreiten eines Grenzwertes einer Netzfrequenz die Leistungseinspeisung in das elektrische Netz abschaltet.

Bei Windenergieanlagen muss die abgegebene Leistung der Windenergieanlage bei Frequenzänderung im Netz verändert werden. Dabei kann gefordert sein, die Leistung zu reduzieren, wenn die Frequenz ansteigt. Bekannt ist auch die Windenergieanlage gedrosselt zu betreiben, um bei Frequenzabfall die Leistung erhöhen zu können. Bei extremen Frequenzereignissen im Netz muss die Leistung bis auf Null reduziert werden oder die Anlage sich vom Netz trennen.

Derartige Verfahren sind zum Beispiel aus der DE 100 22 974 A1, der EP 1 790 850 oder der WO 2010/000648 A2 bekannt.

In der US 2011/0153099 A1 und der US 2012/0104756 A1 ist jeweils beschrieben, die Leistungsabgabe einer Windenergieanlage basierend auf der Änderungsrate der Netzfrequenz zu ändern. Aus der US 2011/0109086 A1 ist darüber hinaus bekannt, die Leistungsabgabe basierend auf der Änderungsrate der Netzfrequenz und der absoluten Abweichung der Netzfrequenz von der Sollfrequenz zu ändern.

Diese Regelung wird verlangt, da Änderungen in der Netzfrequenz im Allgemeinen auf Störungen des Gleichgewichts von Erzeugung und Verbrauch im Netz beruhen. Es gibt aber eine Vielzahl von Netzereignissen, die keinen Einfluss auf dieses Gleichgewicht haben, aber innerhalb der Netzmessung als erhebliche Netzfrequenzstörungen wahrgenommen werden. Beispielsweise können Phasensprünge bei Schalthandlungen im Netz die Zeit zwischen zwei Nulldurchgängen verändern, so dass die Netzmessung diesen als einen plötzlichen Frequenzsprung erfasst.

Windenergieanlagen reagieren aufgrund der anspruchsvollen Forderungen der Netzbetreiber auf derartige Ereignisse mit plötzlichen und erheblichen Leistungsänderungen, die im Extremfall auch eine Abschaltung der Leistungseinspeisung beinhalten. Diese Leistungsänderungen führen ihrerseits zu Frequenzänderungen und müssen vom Netzbetreiber ausgeregelt werden. Derartige Ereignisse sind daher unerwünscht.

Aufgabe der vorliegenden Erfindung ist es, die vorstehenden Nachteile zu vermeiden, die Änderungen in der Netzfrequenz besser zu erkennen und die Windenergieanlage besser auf Ereignisse im elektrischen Netz reagieren zu lassen.

Die erfindungsgemäße Lösung liegt in einem Verfahren und in einer Vorrichtung gemäß den Merkmalen der unabhängigen Ansprüche, vorteilhafte Weiterbildungen sind Gegenstand der abhängigen Ansprüche.

Erfindungsgemäß wird so verfahren, dass bei einer Windenergieanlage, die an ein elektrisches Netz angeschlossen ist, eine im Netz vorliegende Netzfrequenz erfasst und bei der die Leistungsabgabe in Abhängigkeit der Netzfrequenz durch eine Steuerung geregelt wird und insbesondere bei Überschreiten eines Grenzwertes einer Netzfrequenz die Leistungseinspeisung in das elektrische Netz abschaltet, eine Änderung der Netzfrequenz über die Zeit erfasst wird, eine Änderungsrate bestimmt und die Änderungsrate mit einem Änderungsratengrenzwert verglichen wird und bei Überschreiten des Änderungsratengrenzwertes ein modifizierter Frequenzwert zur Regelung der Leistungsabgabe genutzt wird, wobei der modifizierte Frequenzwert gegenüber dem nicht modifizierten Frequenzwert eine geringere Änderungsrate aufweist.

Die Erfindung hat erkannt, dass die Auswertung der Netzspannung, insbesondere der positiven Flanken eines Nulldurchgangs, bei Schaltvorgängen und Fehlern im Netz zu Fehlmessungen führt und in der Folge die Regelung der Windenergieanlage aufgrund der Fehlmessung falsch reagiert. Die Reaktion führt dazu, dass die Windenergieanlage ihre Leistungseinspeisung stark verändert, also bei Überfrequenz stark reduziert oder bei Unterfrequenz stark erhöht (sofern eine Leistungsreserve vorgehalten wurde) und damit Schwankungen in der Frequenz erst auslöst oder verschlimmert. Im Extremfall wird keine Leistung mehr eingespeist. Die Erzeugungsleistung fehlt somit schlagartig im Gleichgewicht des elektrischen Netzes. Diese Schwankungen müssen dann durch Regelungseingriffe konventioneller Kraftwerke ausgeglichen werden.

Die Erfindung setzt dabei an dem Punkt an, dass die Regelung nicht ihren eigenen Fehler kompensiert, sondern die gemessene Größe modifiziert. Dabei wird die Änderungsrate der Frequenz über die Zeit erfasst und mit einem technisch sinnvollen Änderungsratengrenzwert für die Änderungsrate verglichen. Der Messwert der Netzfrequenz als Eingangsgröße für den Regler der Windenergie wird bei Überschreiten des Änderungsratengrenzwerts auf einen gegenüber der gemessenen Netzfrequenz modifizierten Frequenzwert begrenzt. Dieses kann vorzugsweise der Wert bei oder vor Eintritt der Änderung zuzüglich des Änderungsratengrenzwerts multipliziert mit der Zeit seit Eintritt der Frequenzänderung sein. Die Abweichung des modifizierten Frequenzwertes weicht also weniger von dem vorher gemessenen Frequenzwert ab. Wird der Änderungsratengrenzwert nicht überschritten, so wird die gemessene Netzfrequenz zur Regelung der Leistungsabgabe genutzt.

Dieses Verfahren grenzt Fehlmessungen der Frequenz, wie sie beispielsweise durch Phasensprünge hervorgerufen werden, aus und erhält gleichzeitig eine hohe Dynamik des Reglers, da Mittelwertbildung oder Integralanteile im Regelkreis vermieden werden. Auch werden Fehlmessungen nicht vollständig ignoriert und es folgt entsprechend bekannter Reaktionen konventioneller Kraftwerke eine gemäßigte Änderung der Leistungseinspeisung, insbesondere erfolgt keine schlagartige Abschaltung mehr.

Bevorzugt ist dabei das Verfahren insbesondere so anzuwenden, dass der modifizierte Frequenzwert mit Hilfe eines Anstiegswertes oder einer Anstiegsfunktion berechnet wird. Der Änderungsratengrenzwert und/oder der Anstiegswert kann dabei derart gewählt werden, dass er im Bereich der maximalen Frequenzänderungsrate des elektrischen Netzes liegt. Diese Frequenzänderungsrate liegt insbesondere im Bereich 3 bis 15 Hz/s. Derartige Änderungsraten kommen bei netzgekoppelten Synchrongeneratoren konventioneller thermischer Kraftwerke vor.

Es kann weiter vorgesehen sein, dass die Verwendung des modifizierten Frequenzwertes zeitlich begrenzt wird. Dieses ist besonders sinnvoll, da nach Ablauf einer bestimmten Zeit davon auszugehen ist, dass durch transiente, sprunghafte Vorgänge im Netz keine Auswirkung auf die Netzfrequenzmessung mehr fortbesteht, sondern die gemessene Frequenz tatsächlich vorliegt und die Messung nicht mehr fehlerbehaftet ist. Vorzugsweise liegt diese Zeit im Bereich 20 bis 100ms, besonders bevorzugt im Bereich 20-50ms. Insbesondere kann weiter vorgesehen sein, dass nach Ablauf der vorgebbaren Zeit der modifizierte Frequenzwert sanft auf den gemessenen Grenzwert zurückgeführt wird. Unter "sanft" wird hierbei verstanden, dass nicht sprunghaft auf den unmodifizierten gemessenen Frequenzwert umgeschaltet wird, sondern der modifizierte Frequenzwert dem unmodifizierten beispielsweise über eine Rampenfunktion angenähert wird. In einer bevorzugten Weiterbildung ist vorgesehen, dass zusätzlich zur Netzfrequenz die Höhe der im Netz vorliegenden Netzspannung gemessen wird und der Frequenzwert nicht modifiziert wird, solange nicht gleichzeitig zur Änderung der Netzfrequenz über den Grenzwert hinaus ein vorgegebener Spannungsgrenzwert überschritten wird. Unter Spannungsgrenzwert kann hierbei sowohl die Höhe der Spannung, als auch der Anstieg der Spannung über der Zeit verstanden werden. Durch den Vergleich der Höhe der Netzspannung mit einem Grenzwert werden transiente Vorgänge in der Spannung erfasst und somit die Netzfehler von anderen Vorgängen, wie zum Beispiel Phasensprüngen unterschieden. Durch diese zusätzliche Plausibilitätskontrolle der Frequenzmessung wird die Sicherheit der Fehlererkennung weiter erhöht.

In einer bevorzugten Weiterbildung ist vorgesehen, dass die Frequenz aus dem zeitlichen Abstand der Nulldurchgänge der Spannung sowohl mit positiver, als auch mit negativer Steigung bestimmt wird und insbesondere, dass die Frequenz aus dem Spannungsverlauf aller drei Phasen bestimmt werden kann. Die beiden vorstehenden Maßnahmen zur Verbesserungen der Frequenzmessung sind bislang nicht bekannt gewesen. Im Fall der Windenergieanlage sind sie besonders vorteilhaft, da die Frequenz somit häufiger und besser gemessen wird.

Die Messung an allen drei Phasen kann ebenfalls zu Plausibilitätsprüfungen genutzt werden, so dass besonders stark abweichende Messungen an einer einzelnen Phase als Messfehler nicht berücksichtigt und somit nicht ausgegeben werden. Die Messung der Frequenz kann auch derart weitergebildet werden, dass bei schlechter Signalqualität an einer oder zwei Phasen die Frequenz für diese Phasen aus den Phasen mit ausreichend guter Signalqualität berechnet wird. Die Erfindung bezieht sich ferner auf eine entsprechende Windenergieanlage zum Ausführen des Verfahrens.

Die Erfindung wird nachfolgend unter Bezugnahme auf die beigefügten Zeichnungen anhand einer vorteilhaften Ausführungsform beispielhaft beschrieben. Bezüglich aller im Text nicht näher erläuterten erfindungsgemäßen Einzelheiten wird ausdrücklich auf die Zeichnungen verwiesen. Es zeigen:
- Figur 1:: eine Windenergieanlage und
- Figur 2:: den erfindungsgemäßen Umrichterregler.

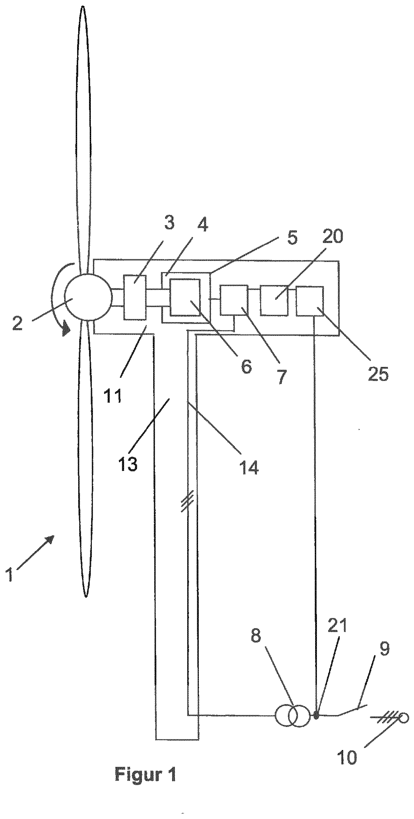

Der Aufbau der Windenergieanlage wird anhand von Figur 1 kurz erläutert. Der Windrotor 2 der Windenergieanlage 1 wird durch den Wind in Drehung versetzt. Der Windrotor 2 kann dabei mechanisch über ein Getriebe 3 mit dem Generator 4 verbunden sein und versetzt den Rotor 6 des Generators 4 in Drehung. Der Stator 5 des Generators ist über Leitungskabel an einen Umrichter 7 angeschlossen, der wiederum ebenfalls über Leistungskabel im Turm 14, einen Transformator 8 und einen Trennschalter 9 an das elektrische Netz 10 angeschlossen ist. Zwischen Umrichter 7 und elektrischem Netz 10 wird die Spannung bzw. deren Verlauf mittels einer Spannungsmessvorrichtung 21 gemessen. Die genaue Anordnung der Spannungsmessvorrichtung 21 kann dabei nach weiteren technischen Notwendigkeiten gewählt werden. In Figur 1 befindet sich die Spannungsmessvorrichtung 21 auf der Hochspannungsseite des Transformators 8.

Aus dem an der Messstelle 21 gemessenen Spannungsverlauf wird in einem Frequenzauswertemodul 25 eine Frequenz ermittelt und an die Steuerung 20 ausgegeben. Bei Vorliegen einer Frequenzänderung im elektrischen Netz 10 wird die Abgabeleistung der Windenergieanlage verändert. Dabei kann durch Regelung der Anstellwinkel der Rotorblätter und/oder durch Regelung des Drehmoments des Generators, je nach Arbeitspunkt der Windenergieanlage vor der Frequenzänderung, die Leistung nach oder während der Frequenzänderung erhöht oder erniedrigt werden.

Im Allgemeinen ist die Höhe und Art der Leistungsänderung bezogen auf die Abweichung der Ist-Frequenz von der NennFrequenz durch den Betreiber des angeschlossenen elektrischen Netzes festgelegt.

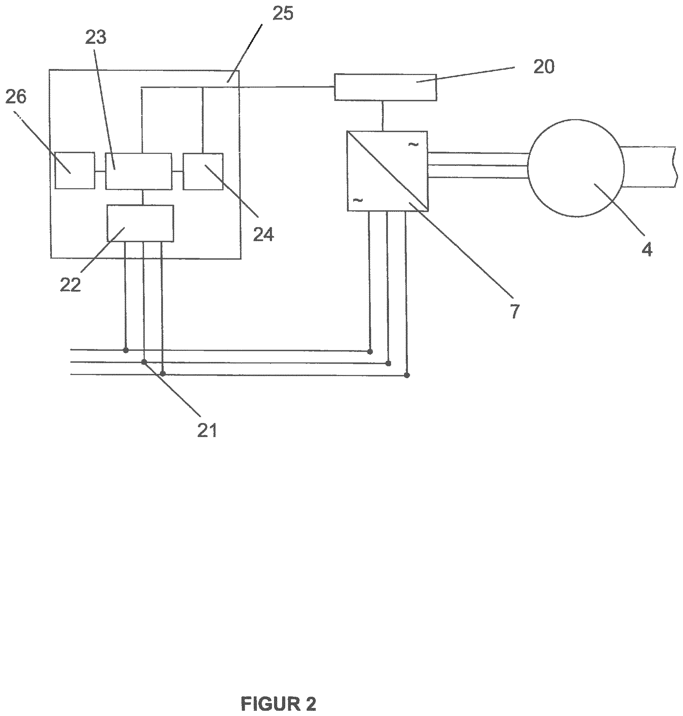

Figur 2 zeigt den Aufbau der erfindungsgemäßen Regelung genauer.

Beispielsweise wird der Spannungsverlauf der elektrischen Spannung mittels der Spannungsmesseinrichtung 21 gemessen und der Spannungsverlauf mindestens einer Phase an das Frequenzauswertemodul 25 ausgegeben. Innerhalb des Frequenzauswertemoduls 25 wird die Frequenz aus den zeitlichen Abständen der Nulldurchgänge des Spannungsverlaufs in einem Frequenzbestimmungsmodul 22 ermittelt und an ein Anstiegsmodul 23 ausgegeben. Das Anstiegsmodul 23 bestimmt anhand von vorgegebenen Grenzwerten den Anstieg vom vorherigen Frequenzwert auf den aktuellen Frequenzwert. Zusätzlich oder alternativ kann das Anstiegsmodul 23 auch so ausgebildet sein, dass es den Anstieg gegen mehrere Frequenzwerte in der Vergangenheit ermittelt und mit einem oder verschiedenen Grenzwerten vergleicht.

Sollte kein Grenzwert überschritten sein gibt das Anstiegsmodul 23 den unbegrenzten Frequenzwert an die Steuerung 20 aus, die ggf. entsprechend ihrer internen Parametrierung geänderte Drehmomentsollwerte an den Umrichter 14, neue Blattwinkelvorgaben an die Blattverstelleinrichtung (nicht gezeigt) ausgibt oder die Leistungseinspeisung der Windenergieanlage 1 abschaltet, indem der Trennschalter 9 geöffnet und/oder der Umrichter 7 entsprechend angesteuert wird.

Sollte das Anstiegsmodul eine Grenzwertüberschreitung feststellen, leitet es den Frequenzwert an ein Begrenzungsmodul 24 weiter, dass auf Basis eines maximalen Anstiegswertes oder einer Anstiegsfunktion und dem vorherigen Frequenzwert einen neuen, begrenzten Frequenzwert berechnet und an die Steuerung 20 ausgibt.

Ein Plausibilitätsmodul 26 misst die Zeit und übersteuert die Umleitung des Frequenzwertes vom Anstiegsmodul 23 auf das Begrenzungsmodul 24, wenn die Umleitung eine vorgegebene Zeit überschreitet oder solange nicht gleichzeitig die Spannung im elektrischen Netz einen Spannungsgrenzwert überschreitet, derart, dass der vom Frequenzbestimmungsmodul 22 ermittelte Frequenzwert vom Anstiegsmodul 23 direkt an die Steuerung ausgegeben wird.

## Patentansprüche

1. Verfahren zum Steuern einer Windenergieanlage, die an ein elektrisches Netz (10) angeschlossen ist, eine im Netz vorliegende Netzfrequenz erfasst und bei der die Leistungsabgabe in Abhängigkeit der Netzfrequenz durch eine Steuerung (20) geregelt wird und insbesondere bei Überschreiten eines Grenzwertes einer Netzfrequenz die Leistungseinspeisung in das elektrische Netz abschaltet, wobei eine Änderung der Netzfrequenz über die Zeit erfasst wird, eine Änderungsrate bestimmt und die Änderungsrate mit einem Änderungsratengrenzwert verglichen wird,
**dadurch gekennzeichnet dass**
bei Überschreiten des Änderungsratengrenzwerts ein modifizierter Frequenzwert zur Regelung der Leistungsabgabe genutzt wird, wobei der modifizierte Frequenzwert gegenüber dem nicht modifizierten Frequenzwert eine geringere Änderungsrate aufweist.

2. Verfahren zum Steuern einer Windenergieanlage nach Anspruch 1, **dadurch gekennzeichnet, dass** der modifizierte Frequenzwert mit Hilfe eines Anstiegswertes oder einer Anstiegsfunktion berechnet wird.

3. Verfahren zum Steuern einer Windenergieanlage nach Anspruch 1 oder 2, **dadurch gekennzeichnet, dass** der Änderungsratengrenzwert und/oder der Anstiegswert derart gewählt wird, dass er im Bereich der maximalen Frequenzänderungsrate des elektrischen Netzes liegt, insbesondere im Bereich 3 bis 15 Hz/s.

4. Verfahren zum Steuern einer Windenergieanlage nach einem der vorhergehenden Ansprüche, **dadurch gekennzeichnet, dass** die Verwendung des modifizierten Frequenzwertes zeitlich begrenzt wird und insbesondere nach Ablauf einer vorgebbaren Zeit der modifizierte Frequenzwert auf den gemessenen Grenzwert zurückgeführt wird.

5. Verfahren zum Steuern einer Windenergieanlage nach einem der vorhergehenden Ansprüche, **dadurch gekennzeichnet, dass** zusätzlich zur Netzfrequenz die im Netz vorliegende Netzspannung gemessen wird und der Frequenzwert nicht modifizierte wird, solange nicht gleichzeitig zur Änderung der Netzfrequenz ein Spannungsgrenzwert überschritten wird.

6. Verfahren zum Steuern einer Windenergieanlage nach einem der vorhergehenden Ansprüche, **dadurch gekennzeichnet, dass** die Frequenz aus dem zeitlichen Abstand der Nulldurchgänge der Spannung sowohl mit positiver, als auch mit negativer Steigung bestimmt wird.

7. Verfahren zum Steuern einer Windenergieanlage nach einem der vorhergehenden Ansprüche, **dadurch gekennzeichnet, dass** die Frequenz aus dem Spannungsverlauf aller drei Phasen bestimmt wird.

8. Windenergieanlage mit einem von einem Windrotor (2) angetriebenen Generator (4) zur Abgabe elektrischer Leistung, einem Umrichter (7) zum Umwandeln zumindest eines Teils der vom Generator (4) abgegebenen Leistung, einem Frequenzerfassungsmodul (25), zum Erfassen einer in einem angeschlossenen elektrischen Netz (10) vorliegenden Frequenz und Ausgeben der erfassten Frequenz an eine Steuerung (20), die in Abhängigkeit der erfassten Frequenz die Leistungsabgabe der Windenergieanlage regelt, wobei das Frequenzerfassungsmodul (25) ein Anstiegsmodul (23) zur Bestimmung der Änderungsrate der erfassten Frequenz über die Zeit und einen Vergleich mit einem Änderungsratengrenzwert umfasst,
**dadurch gekennzeichnet, dass**
das Frequenzerfassungsmodul (25) weiter ein Begrenzungsmodul (24) umfasst, das dazu ausgebildet ist bei Überschreiten des Änderungsratengrenzwert im Anstiegsmodul einen modifizierten Frequenzwert zu ermitteln und an die Steuerung (20) auszugeben, wobei der modifizierte Frequenzwert gegenüber dem nicht modifizierten Frequenzwert eine geringere Änderungsrate aufweist.

9. Windenergieanlage nach Anspruch 8, **dadurch gekennzeichnet, dass** im Begrenzungsmodul (24) ein vorgegebener Anstiegswert oder eine vorgegebene Anstiegsfunktion hinterlegt ist, mit deren Hilfe der modifizierte Frequenzwert berechnet wird.

10. Windenergieanlage nach Anspruch 8 oder 9, **dadurch gekennzeichnet, dass** der Änderungsratengrenzwert und/oder der Anstiegswert derart gewählt wird, dass er im Bereich der maximalen Frequenzänderungsrate des elektrischen Netzes liegt, insbesondere im Bereich 3 bis 15 Hz/s.

11. Windenergieanlage nach einem der Ansprüche 8 bis 10, **dadurch gekennzeichnet, dass** das Frequenzerfassungsmodul (25) ein Plausibilitätsmodul (26) umfasst, das dazu ausgebildet die Ausgabe des modifizierte Frequenzwertes zu übersteuern, derart, dass die erfasste Frequenz an die Steuerung ausgegeben wird.

12. Windenergieanlage nach Anspruch 11, **dadurch gekennzeichnet, dass** das Plausibilitätsmodul (26) die Übersteuerung in Abhängigkeit einer seit Beginn des Frequenzanstieg vergangenen Zeit und/oder eines Spannungsgrenzwertes vornimmt.

## Claims

1. Method for controlling a wind turbine which is connected to an electrical grid (10), detects a grid frequency present in the grid and in the case of which the power output is regulated on the basis of the grid frequency by a controller (20) and, in particular, switches off the power feed into the electrical grid if a limit value of a grid frequency is exceeded, wherein a change in the grid frequency over time is detected, a rate of change is determined and the rate of change is compared with a rate of change limit value,
**characterized in that**
a modified frequency value is used to regulate the power output in the event of the rate of change limit value being exceeded, wherein the modified frequency value has a lower rate of change in comparison with the non-modified frequency value.

2. Method for controlling a wind turbine according to Claim 1, **characterized in that** the modified frequency value is calculated using an increase value or an increase function.

3. Method for controlling a wind turbine according to Claim 1 or 2, **characterized in that** the rate of change limit value and/or the increase value is selected such that it is in the range of the maximum rate of change of frequency of the electrical grid, in particular in the range from 3 to 15 Hz/s.

4. Method for controlling a wind turbine according to any of the preceding claims, **characterized in that** the use of the modified frequency value is temporally limited and, in particular, the modified frequency value is returned to the measured limit value once a predefinable time has elapsed.

5. Method for controlling a wind turbine according to any of the preceding claims, **characterized in that**, in addition to the grid frequency, the grid voltage present in the grid is measured and the frequency value is not modified as long as a voltage limit value is not exceeded at the same time as the change in the grid frequency.

6. Method for controlling a wind turbine according to any of the preceding claims, **characterized in that** the frequency is determined from the temporal spacing of the zero-crossings of the voltage, both with positive and with negative gradient.

7. Method for controlling a wind turbine according to any of the preceding claims, **characterized in that** the frequency is determined from the voltage profile of all three phases.

8. Wind turbine having a generator (4) driven by a wind-powered rotor (2) for outputting electric power, a converter (7) for converting at least some of the power output by the generator (4), a frequency detection module (25) for detecting a frequency present in a connected electrical grid (10) and outputting the detected frequency to a controller (20) which regulates the power output of the wind turbine on the basis of the detected frequency, wherein the frequency detection module (25) comprises an increase module (23) for determining the rate of change of the detected frequency over time and comparing with a rate of change limit value,
**characterized in that**
the frequency detection module (25) also comprises a limiting module (24) which is designed to calculate a modified frequency value and output it to the controller (20) in the event that the rate of change limit value in the increase module is exceeded, wherein the modified frequency value has a lower rate of change in comparison with the non-modified frequency value.

9. Wind turbine according to Claim 8, **characterized in that** a predefined increase value or a predefined increase function is stored in the limiting module (24) and the modified frequency value is calculated using said increase value or increase function.

10. Wind turbine according to Claim 8 or 9, **characterized in that** the rate of change limit value and/or increase value is selected such that it is in the range of the maximum rate of change of frequency of the electrical grid, in particular in the range from 3 to 15 Hz/s.

11. Wind turbine according to any of Claims 8 to 10, **characterized in that** the frequency detection module (25) comprises a plausibility module (26) which is designed to overmodulate the output of the modified frequency value such that the detected frequency is output to the controller.

12. Wind turbine according to Claim 11, **characterized in that** the plausibility module (26) performs the overmodulation on the basis of a time which has elapsed since the start of the frequency increase and/or a voltage limit value.

## Revendications

1. Procédé de commande d'une éolienne qui est raccordée à un réseau électrique (10), qui détecte une fréquence de réseau présente sur le réseau et dans laquelle la puissance de sortie est régulée par une commande (20) en fonction de la fréquence de réseau, et en particulier l'alimentation en puissance du réseau électrique est coupée lorsqu'une valeur limite d'une fréquence de réseau est dépassée, une variation de fréquence de réseau étant détectée dans le temps, un taux de variation étant déterminé et le taux de variation étant comparé à une limite de taux de variation,
**caractérisé en ce que**
si la limite de taux de variation est dépassée, une valeur de fréquence modifiée est utilisée pour réguler la puissance de sortie, la valeur de fréquence modifiée ayant un taux de variation inférieur par rapport à la valeur de fréquence non modifiée.

2. Procédé de commande d'une éolienne selon la revendication 1, **caractérisé en ce que** la valeur de fréquence modifiée est calculée à l'aide d'une valeur d'augmentation ou d'une fonction d'augmentation.

3. Procédé de commande d'une éolienne selon la revendication 1 ou 2, **caractérisé en ce que** la valeur limite de taux de variation et/ou la valeur d'augmentation est choisie de manière à ce qu'elle se situe dans la plage de taux de variation de fréquence maximale du réseau électrique, notamment dans la plage de 3 à 15 Hz/s.

4. Procédé de commande d'une éolienne selon l'une des revendications précédentes, **caractérisé en ce que** l'utilisation de la valeur de fréquence modifiée est limitée dans le temps et notamment, après écoulement d'un temps prédéfini, la valeur de fréquence modifiée est ramenée à la valeur limite mesurée.

5. Procédé de commande d'une éolienne selon l'une des revendications précédentes, **caractérisé en ce que** la tension de réseau présente sur le réseau est mesurée en plus de la fréquence de réseau et la valeur de fréquence n'est pas modifiée tant qu'une valeur de tension limite n'est pas dépassée en même temps que la fréquence du réseau est modifiée.

6. Procédé de commande d'une éolienne selon l'une des revendications précédentes, **caractérisé en ce que** la fréquence est déterminée à partir de l'intervalle de temps entre les passages par zéro de la tension aussi bien avec une pente positive qu'avec une pente négative.

7. Procédé de commande d'une éolienne selon l'une des revendications précédentes, **caractérisé en ce que** la fréquence est déterminée à partir du profil de tension de l'ensemble des trois phases.

8. Éolienne comprenant un générateur (4) entraîné par un rotor éolien (2) et destiné à délivrer de la puissance électrique, un convertisseur (7) destiné à convertir au moins une partie de la puissance délivrée par le générateur (4), un module de détection de fréquence (25) destiné à détecter une fréquence présente sur un réseau électrique raccordé (10) et délivrer la fréquence détectée à une commande (20) qui régule la puissance de sortie de l'éolienne en fonction de la fréquence détectée, le module de détection de fréquence (25) comprenant un module d'augmentation (23) destiné à déterminer le taux de variation de la fréquence détectée dans le temps et le comparer à une limite de taux de variation,
**caractérisée en ce que**
le module de détection de fréquence (25) comprend en outre un module de limitation (24) qui est conçu pour déterminer une valeur de fréquence modifiée lorsque la valeur limite de taux de variation est dépassée dans le module d'augmentation et pour la délivrer à la commande (20), la valeur de fréquence modifiée ayant un taux de variation inférieur par rapport à la valeur de fréquence non modifiée.

9. Éolienne selon la revendication 8, **caractérisée en ce qu'**une valeur d'augmentation spécifiée ou une fonction d'augmentation spécifiée, à l'aide de laquelle la valeur de fréquence modifiée est calculée, est mémorisée dans le module de limitation (24).

10. Éolienne selon la revendication 8 ou 9, **caractérisée en ce que** la valeur limite de taux de variation et/ou la valeur d'augmentation est choisie de manière à ce qu'elle se situe dans la plage du taux de variation de fréquence maximal du réseau électrique, notamment dans la plage de 3 à 15 Hz/s.

11. Éolienne selon l'une des revendications 8 à 10, **caractérisée en ce que** le module de détection de fréquence (25) comprend un module de plausibilité (26) qui est conçu pour sur-réguler la sortie de la valeur de fréquence modifiée de manière à ce que la fréquence détectée soit délivrée à la commande.

12. Éolienne selon la revendication 11, **caractérisée en ce que** le module de plausibilité (26) effectue la sur-régulation en fonction d'un temps écoulé depuis le début de la montée en fréquence et/ou d'une valeur limite de tension.
